# EUROPEAN PATENT APPLICATION

(11) **EP 2 073 109 A2**
(43) Date of publication of application: **24.06.2009**
(21) Application number: 08254027.9
(22) Date of filing: 17.12.2008
(51) Int. Cl.: G06F 3/045

(54) **Touch panel and display device using the same**

(30) Priority: 21.12.2007 CN 200710125410; 21.12.2007 CN 200710125407; 21.12.2007 CN 200710125409; 27.12.2007 CN 200710305828
(71) Applicant: Tsing Hua University, Haidian District Beijing City (CN); Hon Hai Precision Industry Co., Ltd., Tu-cheng City, Taipei Hsien (TW)
(72) Inventor: Li-Jiang, Kai, Haidian District Beijing City (CN); Liu, Linag, Haidian District Beijing City (CN); Fan, Shou-Shan, Haidian District Beijing City (CN)
(74) Representative: Stuttard, Garry Philip

(57) **Abstract**

A touch panel includes a first electrode plate, and a second electrode plate separated from the first electrode plate. The first electrode plate includes a first base and a first conductive layer. The first conductive layer is located on a surface of the first base. The second electrode plate includes a second base, and a second conductive layer. The second conductive layer is located on a surface of the second base. The second conductive layer is opposite to the first conductive layer. At least one of the first and second conductive layers includes a plurality of spaced carbon nanotube structures. A display device adopting the touch panel includes the touch panel and a display element.

## Description

The present disclosure relates to a carbon nanotube based touch panel, and a display device incorporating the touch panel.

Following the advancement in recent years of various electronic apparatuses, such as mobile phones, car navigation systems and the like, toward high performance and diversification, there has been continuous growth in the number of electronic apparatuses equipped with optically transparent touch panels at the front of their respective display devices (e.g., liquid crystal panels). A user of any such electronic apparatus operates it by pressing or touching the touch panel with a finger, a pen, a stylus, or a like tool while visually observing the display device through the touch panel. Therefore, a demand exists for touch panels that are superior in visibility and reliable in operation.

At present, different types of touch panels, including resistance, capacitance, infrared, and surface sound-wave types have been developed. Due to their high accuracy and low cost of production, resistance-type touch panels have been widely used.

A conventional resistance-type touch panel includes an upper substrate, a transparent upper conductive layer formed on a lower surface of the upper substrate, a lower substrate, a transparent lower conductive layer formed on an upper surface of the lower substrate, and a plurality of dot spacers formed between the transparent upper conductive layer and the transparent lower conductive layer. The transparent upper conductive layer and the transparent lower conductive layer are formed of electrically conductive indium tin oxide (ITO).

In use, an upper surface of the upper substrate is pressed with a finger, a pen, or a like tool, and visual observation of a screen on the liquid crystal display device provided on a back side of the touch panel is provided. This causes the upper substrate to be deformed, and the upper conductive layer thus comes in contact with the lower conductive layer at the position where the pressing occurs. Voltages are separately applied by an electronic circuit to the transparent upper conductive layer and the transparent lower conductive layer. Thus, the deformed position can be detected by the electronic circuit.

Each of the transparent conductive layers (e.g., ITO layers) is generally formed by means of ion-beam sputtering, and this method is relatively complicated. Additionally, the ITO layer has poor wearability/durability, low chemical endurance, and uneven resistance over an entire area of the touch panel. Furthermore, the ITO layer has relatively low transparency. All the above-mentioned problems of the ITO layer make for a touch panel with low sensitivity, accuracy, and brightness.

What is needed, therefore, is to provide a durable touch panel and a display device using the same with high sensitivity, accuracy, and brightness.

Many aspects of the present touch panel and display device using the same can be better understood with reference to the following drawings. The components in the drawings are not necessarily to scale, the emphasis instead being placed upon clearly illustrating the principles of the present touch panel and display device using the same.

FIG 1 is an exploded, isometric view of a touch panel in accordance with a present embodiment.

FIG. 2 is a side cross-sectional view of the touch panel of FIG 1 once assembled.

FIG. 3 is an exploded, isometric view of a touch panel when the carbon nanotube structure adopting at least one carbon nanotube film in accordance with a present embodiment.

FIG. 4 is an exploded, isometric view of a touch panel in which a plurality of electrodes are adopted in accordance with a present embodiment.

FIG. 5 is an exploded, isometric view of a touch panel in which a plurality of electrodes are adopted and at least one carbon nanotube film is adopted as the carbon nanotube structure in accordance with a present embodiment.

FIG. 6 shows a Scanning Electron Microscope (SEM) image of a carbon nanotube film.

FIG. 7 is a structural schematic of a carbon nanotube segment of the carbon nanotube film in FIG 6.

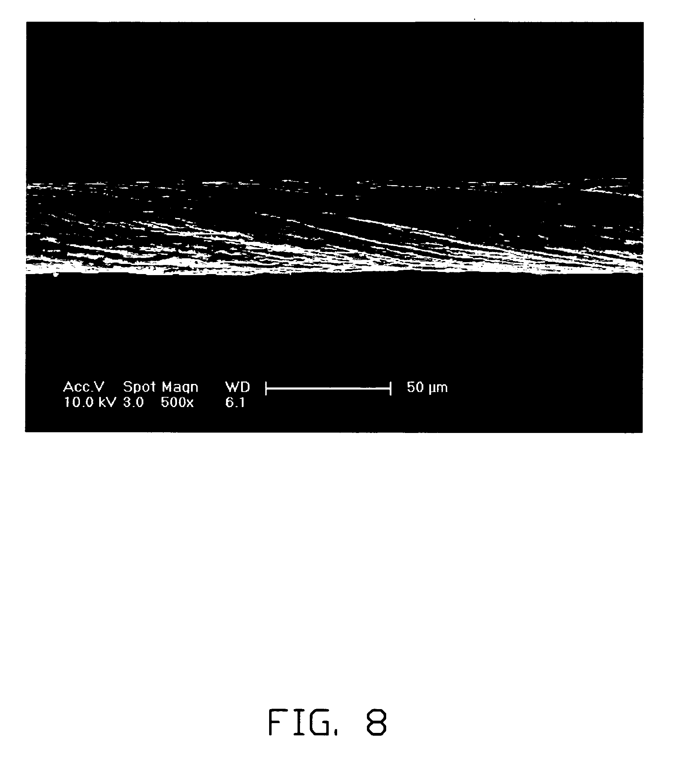

FIG. 8 shows a Scanning Electron Microscope (SEM) image of a carbon nanotube wire-like structure used in the present embodiment.

FIG. 9 is essentially a schematic cross-sectional view of the touch panel of the present embodiment used with a display element of a display device, showing operation of the touch panel with a touch tool.

Corresponding reference characters indicate corresponding parts throughout the views. The exemplifications set out herein illustrate at least one embodiment of the present touch panel and display device using the same, in at least one form, and such exemplifications are not to be construed as limiting the scope of the invention in any manner.

Reference will now be made to the drawings to describe, in detail, embodiments of the present touch panel and display device using the same.

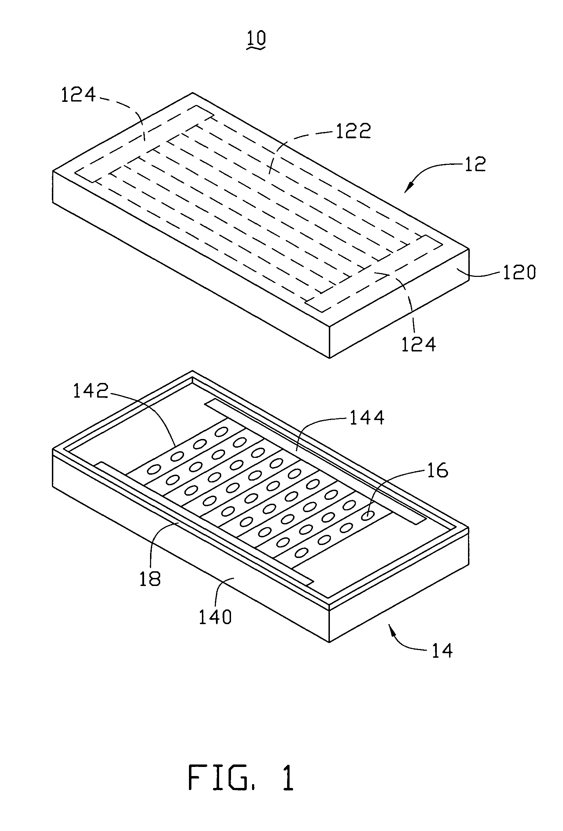

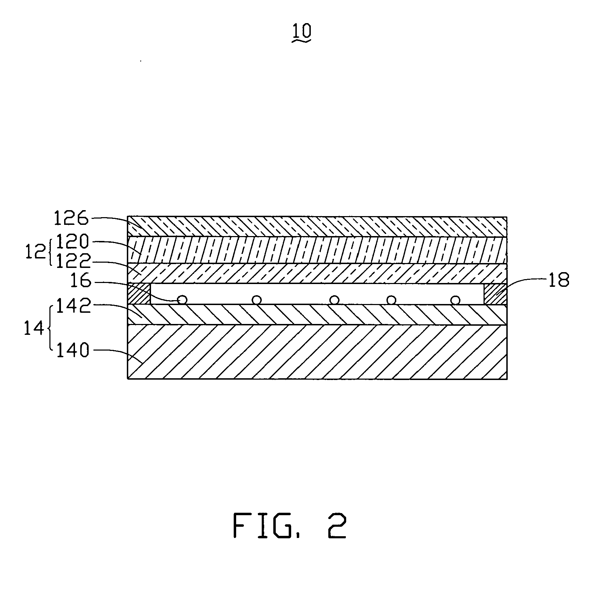

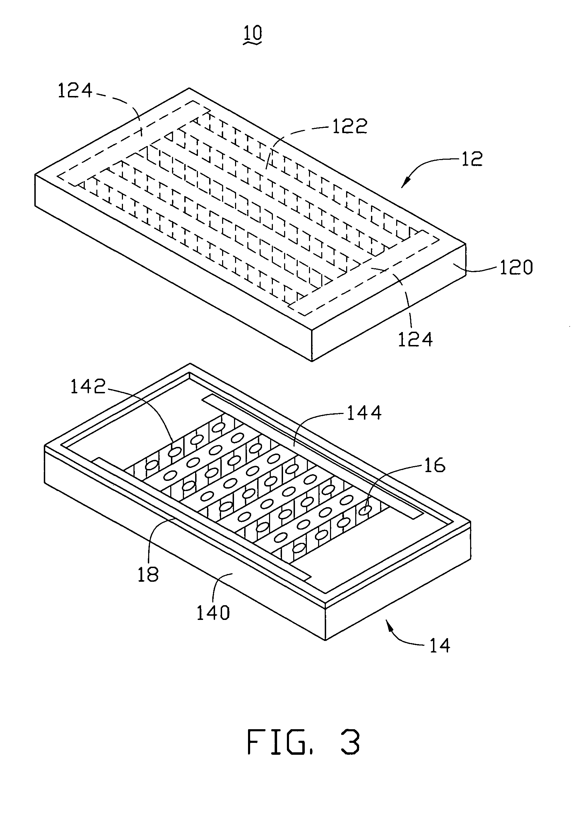

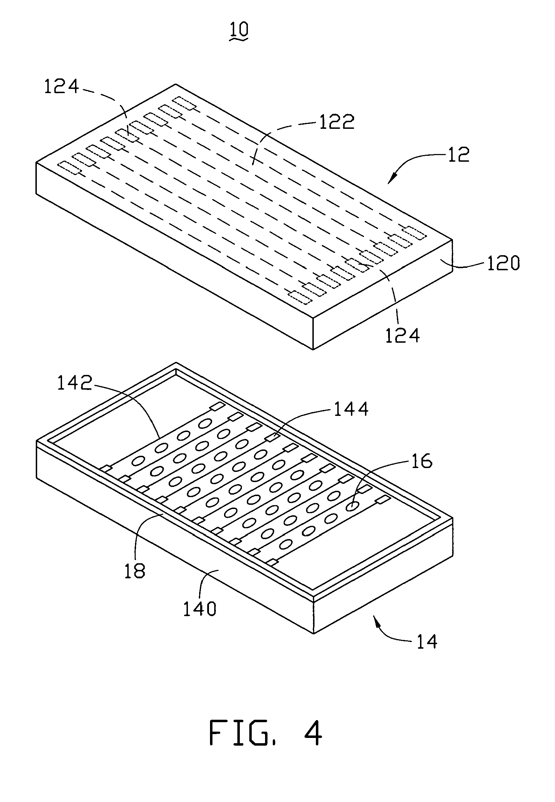

Referring to FIGS. 1 to 5, a touch panel 10 includes a first electrode plate 12, a second electrode plate 14, and a plurality of dot spacers 16 located between the first electrode plate 12 and the second electrode plate 14.

The first electrode plate 12 includes a first base 120, a first conductive layer 122, and two or more first-electrodes 124. The first base 120 has an upper surface and a lower surface, and the upper surface and the lower surface are substantially flat. The first-electrodes 124 and the first conductive layer 122 are located on the lower surface of the first base 120. The two or more first-electrodes 124 are located separately on opposite sides of the first conductive layer 122 and connected to the first conductive layer 122. When there are two first-electrodes 124, the two first-electrodes 124 are located separately on opposite sides of the first conductive layer 122. A direction from one of the first-electrodes 124 across the first conductive layer 122 to the other first-electrode 124 is defined as a second direction. When there are multiple first-electrodes 124, the first-electrodes 124 are arranged in two parallel columns at opposite sides of the lower surface of the first base 120, and are connected with the first conductive layer 122. That is, the two columns of first-electrodes 124 are located at opposite sides of the first conductive layer 122 respectively. A direction from one of the columns of first-electrodes 124 across the first conductive layer 122 to the other column of first-electrodes 124 is defined as a first direction.

The second electrode plate 14 includes a second base 140, a second conductive layer 142, and two or more second-electrodes 144. The second base 140 includes an upper surface and a lower surface, and the upper surface and the lower surface are substantially flat. The second-electrodes 144 and the second conductive layer 142 are located on the upper surface of the second base 140. The two or more second-electrodes 144 are located separately on opposite sides of the second conductive layer 142 and connected to the second conductive layer 142. When there are two second-electrodes 144, the two second-electrodes 144 are located separately on opposite sides of the second conductive layer 142. A direction from one of the second-electrodes 144 across the second conductive layer 142 to the other second-electrode 144 is defined as a second direction. When there are multiple second-electrodes 144, the second-electrodes 144 are arranged in two parallel columns at opposite sides of the upper surface of the second base 140, and are connected with the second conductive layer 142. The second conductive layer 142 is arranged on a major portion of the upper surface of the second base 140. That is, the two columns of second-electrodes 144 are located at opposite sides of the second conductive layer 142. A direction from one of the columns of second-electrodes 144 across the second conductive layer 142 to the other column of second-electrodes 144 is defined as a second direction. In the present embodiment, there are a plurality of first-electrodes 124 and a plurality of second-electrodes 144.

The first direction is perpendicular to the second direction; e.g., the columns of first-electrodes 124 are orthogonal to the columns of second-electrodes 144. The first base 120 can be a transparent and flexible film or plate. The second base 140 also can be a transparent plate or film. A material of the second base 140 can be selected from rigid or flexible materials. When the second base 140 is made of a rigid material, the material of the second base 140 can be selected from a group consisting of glass, quartz and diamond. The second base 140 can play a role of supporting. When the first base 120 and the second base 140 have a flexible planer structure and are made of flexible materials, a thickness of the first base 120 and the second base 140 approximately ranges from 0.01 millimeters to 1 centimeter. A material of the first base 120 and the second base 140 can be selected from a group consisting of polycarbonate (PC), polymethyl methacrylate (PMMA), polyethylene terephthalate, PES, cellulose acetate, benzocyclobutene, polyvinyl chloride (PVC) and any other acrylic resins, and any combination thereof. The first-electrodes 124 and the second-electrodes 144 are made of metal, alloy, conductive polymer, carbon nanotubes or any other suitable conductive material. In the present embodiment, the first base 120 and the second base 140 are both a polyester film, and the first-electrodes 124 and second-electrodes 144 are made of a conductive silver paste.

An insulation layer 18 is provided between the first and second bases 120, 140. In the illustrated embodiment, the insulation layer 18 is in the form of a rectangular bead. The first electrode plate 12 is located on the insulation layer 18. That is, the first conductive layer 122 faces, but is spaced from, the second conductive layer 142. The dot spacers 16 are located on the second conductive layer 142. A distance between the second electrode plate 14 and the first electrode plate 12 is typically in an approximate range from 2 to 20 microns. The insulation layer 18 and the dot spacers 16 are made of, for example, insulation resin or any other suitable insulation material. Electrical insulation between the first electrode plate 12 and the second electrode plate 14 is provided by the insulation layer 18 and the dot spacers 16. It is to be understood that the dot spacers 16 are optional, particularly when the size of the touch panel 10 is relatively small.

In the present embodiment, a transparent protective film 126 is located on the upper surface of the first electrode plate 12. The material of the transparent protective film 126 can be selected from a group consisting of silicon nitrides, silicon dioxides, benzocyclobutenes, polyester films, and polyethylene terephthalates. For example, the transparent protective film 126 can be made of slick plastic and receive a surface hardening treatment to protect the first electrode plate 12 from being scratched when in use.

At least one of the first conductive layer 122 and the second conductive layer 142 includes a plurality of spaced carbon nanotube structures. The carbon nanotube structure includes one or more carbon nanotube film, one or more carbon nanotube wire-like structure and a composite structure comprised of the one or more carbon nanotube film and one or more carbon nanotube wire-like structure. Specifically, the carbon nanotube structure includes a carbon nanotube film or two or more carbon nanotube films stacked with each other or located side by side. The carbon nanotube film includes a plurality of carbon nanotubes uniformly distributed, and arranged disorderly or orderly. A thickness of the carbon nanotube film ranges from about 0.5 nanometers to about 100 micrometers. The plurality of carbon nanotube wire-like structure can be located side by side. The carbon nanotube wire-like structure includes at least one twisted carbon nanotube wire, at least one untwisted carbon nanotube wire or combination thereof. The carbon nanotube wire-like structure can include a plurality of carbon nanotube wires parallel with each other to form a bundle-like structure or a plurality of carbon nanotube wires twisted with each other to form a twisted wire-like structure. A diameter of the carbon nanotube wire-like structure ranges from about 0.5 nanometers to about 100 micrometers. A width of the carbon nanotube structure ranges from about 1 millimeter to about 10 centimeters. A thickness of the carbon nanotube structure ranges from about 0.5 nanometers to about 1 millimeter. A distance between the carbon nanotube structure ranges from 5 nanometers to about 1 millimeter.

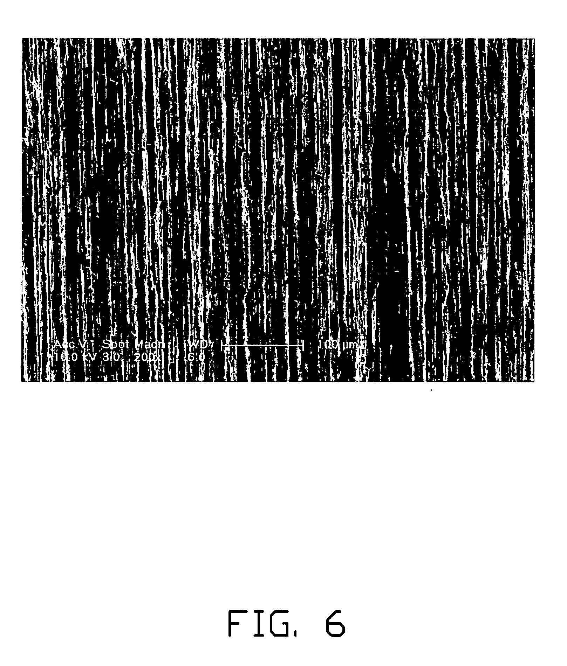

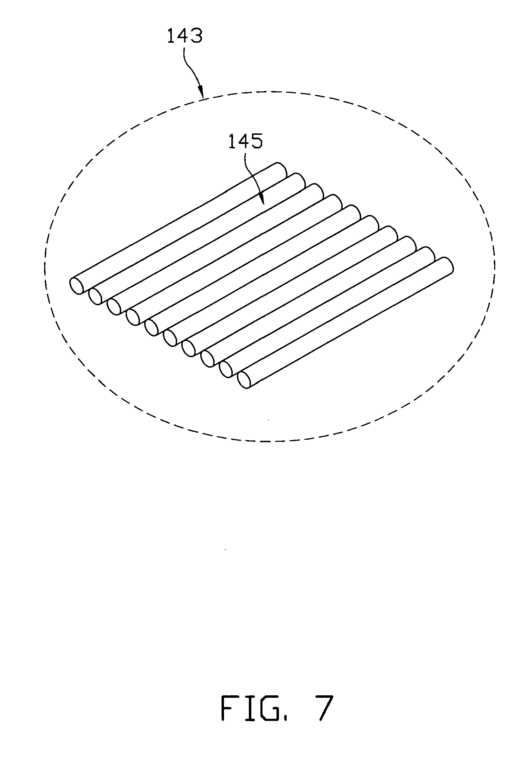

The carbon nanotube film can be acquired by drawing from a carbon nanotube array. The carbon nanotube film includes a plurality of carbon nanotubes arranged in a preferred orientation, and combined by van der Waals attractive force therebetween. Referring to FIGS. 6 and 7, each carbon nanotube film includes a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube film 143 are also oriented along a preferred orientation. When the carbon nanotube structure includes two or more stacked carbon nanotube films, an angle between the aligned directions of the carbon nanotubes in the two adjacent carbon nanotube films ranges from above 0 ° to less than or equal to 90 °. The carbon nanotubes in the carbon nanotube structures can be selected from a group consisting of single-walled, double-walled, and multi-walled carbon nanotubes. A diameter of each single-walled carbon nanotube is in a range from about 0.5 nanometers to about 50 nanometers. A diameter of each double-walled carbon nanotube is in a range from about 1 nanometer to about 50 nanometers. A diameter of each multi-walled carbon nanotube is in a range from about 1.5 nanometers to about 50 nanometers.

It can be understood that the carbon nanotube film also can be acquired by other means, such as by pressing a carbon nanotube array or by a flocculating method. The carbon nanotube film acquired by pressing a carbon nanotube array can be isotropic or includes a plurality of carbon nanotubes arranged along a same direction or arranged along different directions. The carbon nanotube film acquired by the flocculating method includes a plurality of entangled carbon nanotubes.

The untwisted carbon nanotube wire includes a plurality of carbon nanotubes substantially oriented along a same direction (e.g., a direction along the length of the untwisted carbon nanotube wire). The carbon nanotubes are parallel to the axis of the untwisted carbon nanotube wire. The carbon nanotubes can be joined end to end and combined by van der Waals attractive therebetween. The untwisted carbon nanotube wire can be formed by treating the carbon nanotube film drawn from a carbon nanotube array with an organic solvent. Specifically, the carbon nanotube film is treated by applying the organic solvent to the carbon nanotube film to soak the entire surface of the carbon nanotube film. After being soaked by the organic solvent, the adjacent paralleled carbon nanotubes in the carbon nanotube film will bundle together, due to the surface tension of the organic solvent when the organic solvent volatilizing, and thus, the carbon nanotube film will be shrunk into untwisted carbon nanotube wire. The organic solvent is volatile.

The twisted carbon nanotube wire includes a plurality of carbon nanotubes oriented around an axial direction of the twisted carbon nanotube wire. The carbon nanotubes are aligned around the axis of the twisted carbon nanotube wire like a helix. The carbon nanotubes can be joined end to end and combined by van der Waals attractive therebetween. The twisted carbon nanotube wire is formed by twisting the carbon nanotube film by using a mechanical force to turn the two ends of the carbon nanotube film in opposite directions.

In the present embodiment, the first conductive layer 122 and the second conductive layer 142 both include a plurality of carbon nanotube structures. The carbon nanotube structure is a carbon nanotube film. The carbon nanotube film is drawn from a carbon nanotube array. The carbon nanotube films are parallel to each other and spaced apart from each other. Further, all the adjacent carbon nanotube structures are spaced apart a same distance. The carbon nanotube films in the first conductive layer 122 cross the carbon nanotube films in the second conductive layer 142. The carbon nanotube films in the first conductive layer 122 can be aligned along the first direction, and the carbon nanotube films in the second conductive layer 142 can be aligned along the second direction. In this embodiment, the first direction is perpendicular to the second direction. In other embodiments, the first direction can be set at an angle other than perpendicular (oblique) to the second direction.

A plurality of the first-electrodes 124 and/or the second-electrodes 144 is located on opposite sides of the corresponding electrode plate 12, 14 having the plurality of carbon nanotube structures formed thereon. Two ends of each carbon nanotube structure are connected with two opposite first-electrodes 124 and/or second-electrodes 144. That is, each corresponding first-electrode 124 and/or second-electrode 144 is connected with one end of at least one carbon nanotube structure. Lengths of the carbon nanotube structures can be arbitrarily set as desired. The carbon nanotube structures can be parallel to and spaced apart from each other. A width of each carbon nanotube structure is in a range from about 0.5 nanometers to about 100 micrometers (µm). Distances between adjacent carbon nanotube structures are in a range from about 10 nanometers to about I millimeter.

A method for fabricating the above-described first conductive layer 122 and second conductive layer 142 includes the steps of: (a) providing an array of carbon nanotubes or providing a super-aligned array of carbon nanotubes; (b) pulling out a carbon nanotube film from the array of carbon nanotubes, by using a tool (e.g., adhesive tape, pliers, tweezers, or another tool allowing multiple carbon nanotubes to be gripped and pulled simultaneously); and (c) placing a plurality of the carbon nanotube films in parallel and space apart from one another on each of the first base 120 and the second base 140, thereby forming a first conductive layer 122 on the first base 120 and a second conductive layer 142 on the second base 140.

The method of fabricating a carbon nanotube film comprises steps (a) and (b). A carbon nanotube film can be used as a shielding layer.

In step (a), a given super-aligned array of carbon nanotubes can be formed by the substeps of: (a1) providing a substantially flat and smooth substrate; (a2) forming a catalyst layer on the substrate; (a3) annealing the substrate with the catalyst layer in air at a temperature in an approximate range from 700°C to 900°C for about 30 to 90 minutes; (a4) heating the substrate with the catalyst layer to a temperature in the approximate range from 500°C to 740°C in a furnace with a protective gas therein; and (a5) supplying a carbon source gas to the furnace for about 5 to 30 minutes and growing the super-aligned array of carbon nanotubes on the substrate.

In step (a1), the substrate can be a P-type silicon wafer, an N-type silicon wafer, or a silicon wafer with a film of silicon dioxide thereon. In this embodiment, a 4-inch P-type silicon wafer is used as the substrate.

In step (a2), the catalyst can be made of iron (Fe), cobalt (Co), nickel (Ni), or any alloy thereof.

In step (a4), the protective gas can be made up of at least one of nitrogen (N2), ammonia (NH3), and a noble gas. In step (a5), the carbon source gas can be a hydrocarbon gas, such as ethylene (C2H4), methane (CH4), acetylene (C2H2), ethane (C2H6), or any combination thereof.

The super-aligned array of carbon nanotubes can have a height of about 50 microns to 5 millimeters and include a plurality of carbon nanotubes parallel to each other and approximately perpendicular to the substrate. The carbon nanotubes in the array of carbon nanotubes can be selected from a group consisting of single-walled carbon nanotubes, double-walled carbon nanotubes, and multi-walled carbon nanotubes. A diameter of each single-walled carbon nanotube approximately ranges from 0.5 nanometers to 50 nanometers. A diameter of each double-walled carbon nanotube approximately ranges from 1 nanometer to 50 nanometers. A diameter of each multi-walled carbon nanotube approximately ranges from 1.5 nanometers to 50 nanometers.

The super-aligned array of carbon nanotubes formed under the above conditions is essentially free of impurities such as carbonaceous or residual catalyst particles. The carbon nanotubes in the super-aligned array are closely packed together by the van der Waals attractive force.

In step (b), the carbon nanotube structure can be formed by the substeps of: (b1) selecting one or more carbon nanotubes having a predetermined width from the super-aligned array of carbon nanotubes; and (b2) pulling the carbon nanotubes to form carbon nanotube segments that are joined end to end at an uniform speed to achieve a uniform carbon nanotube film.

In step (b1), the carbon nanotube segments can be selected by using a tool, such as adhesive tapes, pliers, tweezers, or another tools allowing multiple carbon nanotubes to be gripped and pulled simultaneously to contact with the super-aligned array. Referring to FIG. 6 and FIG 7, each carbon nanotube segment 143 includes a plurality of carbon nanotubes 145 parallel to each other, and combined by van der Waals attractive force therebetween. The carbon nanotube segments 145 can vary in width, thickness, uniformity and shape. In step (b2), the pulling direction is substantially perpendicular to the growing direction of the super-aligned array of carbon nanotubes.

More specifically, during the pulling process, as the initial carbon nanotube segments 143 are drawn out, other carbon nanotube segments 143 are also drawn out end to end due to the van der Waals attractive force between ends of adjacent carbon nanotube segments 143. This process of drawing ensures a continuous, uniform carbon nanotube film can be formed. The pulling/drawing method is simple, fast, and suitable for industrial applications.

In step (c), the distances between the adjacent carbon nanotube films can be set according to the desired optical transparency properties of the touch panel 10. In the present embodiment, the distances between the adjacent carbon nanotube films are in a range from about 10 nanometers to about 1 millimeter.

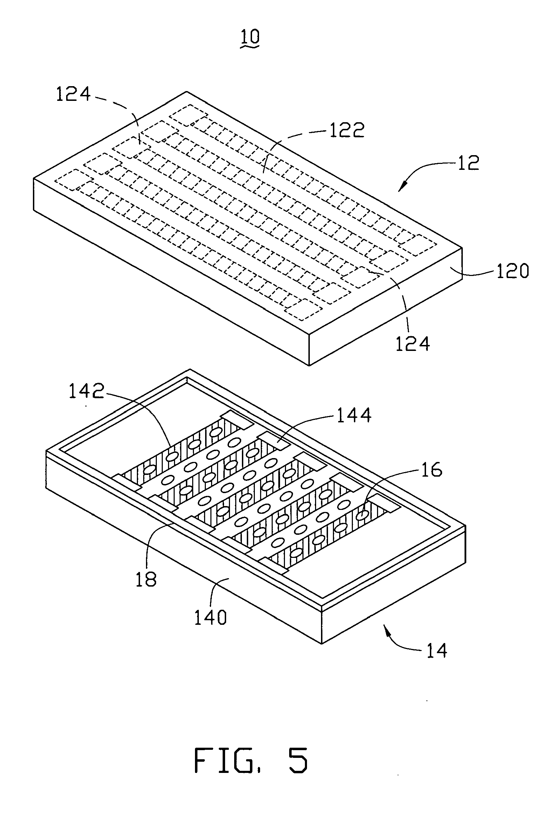

Two ends of each of the carbon nanotube films in the first conductive layer 122 are connected with two corresponding opposite first-electrodes 124, and two ends of each of the carbon nanotube films in the second conductive layer 142 are connected with two corresponding opposite second-electrodes 144. Each first-electrode 124 and second-electrode 144 is connected with one end of at least one carbon nanotube film. In the present embodiment, each first-electrode 124 is connected with the end of only one carbon nanotube film in the first conductive layer 122, and each second-electrode 144 is connected with the end of only one carbon nanotube film in the second conductive layer 142, as can be seen in FIG. 5. In this embodiment, the carbon nanotube films in the first conductive layer 122 are spaced apart, and each carbon nanotube film is arranged along the first direction. Alternatively, each carbon nanotube film in the first conductive layer 122 can stray from the first direction. In this embodiment, the carbon nanotube films in the second conductive layer 142 are spaced apart, and each carbon nanotube film is arranged along the second direction. The first direction is perpendicular to the second direction. Alternatively, each carbon nanotube film in the second conductive layer 142 can stray from the second direction. The plurality of first-electrodes 124 and second-electrodes 144 are connected with a circuit of the touch panel 10 via electrode down-leads.

It can be understood that, the carbon nanotube films also can be staked with each other to form multi-layer carbon nanotube films as the carbon nanotube structure.

Furthermore, the carbon nanotube structures have a particular refractive index and a particular optical transmissivity. Gaps between the carbon nanotube structures are air gaps, which have the refractive index and an optical transmissivity of air. That is, the refractive index and the optical transmissivity of the carbon nanotube structures are different from those of the air gaps. For this reason, a filling layer (not shown) can be formed in the gaps between the carbon nanotube structures. The filling layer is made of material with the same or almost the same refractive index and optical transmissivity as those of the carbon nanotube structures. The filling layer is optional.

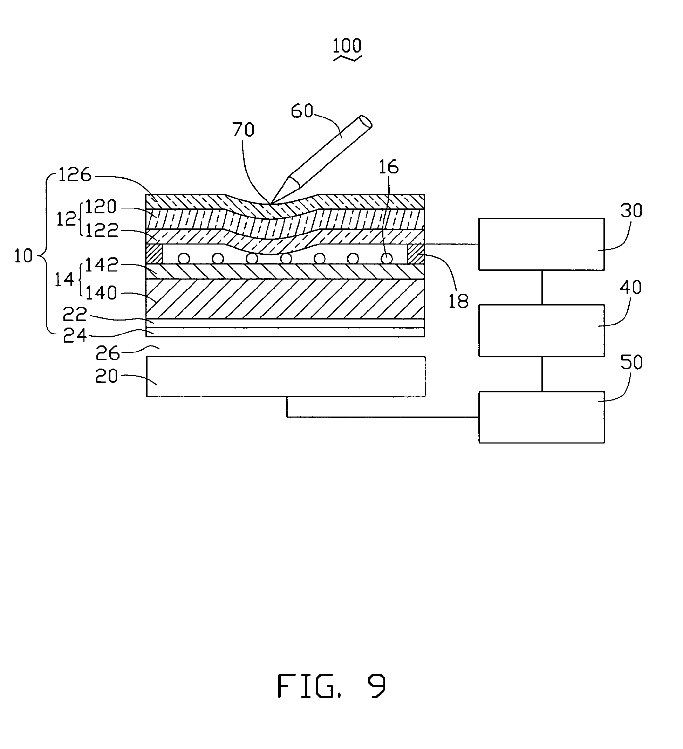

Referring also to FIG. 9, the touch panel 10 can further include a shielding layer 22 located on the lower surface of the second base 140. The material of the shielding layer 22 can be selected from a group consisting of indium tin oxides, antimony tin oxides, carbon nanotube films, and other conductive materials. In the present embodiment, the shielding layer 22 is a carbon nanotube film. The carbon nanotube film includes a plurality of carbon nanotubes, and the orientations of the carbon nanotubes therein can be arbitrarily set as desired. In this embodiment, the carbon nanotubes in the carbon nanotube film of the shielding layer 22 are arranged along a same direction. The carbon nanotube film is connected to ground and acts as a shield, thus enabling the touch panel 10 to operate without interference (e.g., electromagnetic interference).

An exemplary display device 100 includes the touch panel 10, a display element 20, a first controller 30, a central processing unit (CPU) 40, and a second controller 50. The touch panel 10 is opposite and adjacent to the display element 20, and is connected to the first controller 30 by a circuit external to the touch panel 10. The touch panel 10 can be spaced from the display element 20 or installed directly on the display element 20. In the present embodiment, the touch panel 10 is spaced from the display element 20. That is, the touch panel 10 and the display element 20 are spaced apart and separated by a gap 26. The first controller 30, the CPU 40, and the second controller 50 are connected. In particular, the CPU 40 is connected to the second controller 50 to control the display element 20.

The display element 20 can be, e.g., a liquid crystal display, a field emission display, a plasma display, an electroluminescent display, a vacuum fluorescent display, a cathode ray tube, or another display device.

When the shielding layer 22 is located on the lower surface of the second base 140, a passivation layer 24 is located on a surface of the shielding layer 22 that faces away from the second base 140. The material of the passivation layer 24 can, for example, be silicon nitride or silicon dioxide. The passivation layer 24 can protect the shielding layer 22 from chemical or mechanical damage.

In typical operation of the display device 100, a 5V (volts) voltage is applied to the two columns of first-electrodes 124 of the first electrode plate 12, and to the two columns of second-electrodes 144 of the second electrode plate 14. A user operates the display device 100 by pressing the first electrode plate 12 of the touch panel 10 with a finger 60, a pen/stylus 60, or the like, while visually observing the display element 20 through the touch panel 10. This pressing causes a deformation 70 of the first electrode plate 12. The deformation 70 of the first electrode plate 12 establishes an electrical connection between the first conductive layer 122 of the first electrode plate 12 and the second conductive layer 142 of the second electrode plate 14. Changes in voltages along the first direction of the first conductive layer 122 and along the second direction of the second conductive layer 142 can be detected by the first controller 30. Then the first controller 30 transforms the changes in voltages into coordinates of the pressing point, and sends the coordinates to the CPU 40. The CPU 40 then sends out commands according to the coordinates of the pressing point. Thereby, the user can control the display of the display element 20.

The properties of the carbon nanotubes provide superior toughness, high mechanical strength, and uniform conductivity to the carbon nanotube structures derived from the carbon nanotube films and/or carbon nanotube wire-like structures. Thus, the touch panel 10 and the display device 100 adopting the carbon nanotube structures as the first and second conductive layers 122, 142 are durable and highly conductive. Furthermore, since the carbon nanotubes have excellent electrical conductivity properties, each of the first and second conductive layers 122, 142 formed by the plurality of spaced-apart carbon nanotube structures parallel to each other has a uniform resistance distribution and uniform optical transparency. Thus the touch panel 10 and the display device 100 adopting the carbon nanotube structures have improved sensitivity and accuracy. Furthermore, since each first-electrode 124 and second-electrode 144 is connected with the end of at least one corresponding carbon nanotube structure, the determination of the position of the pressing point by detecting the voltage changes between the corresponding pairs of opposite electrodes 124, 144 can be highly accurate. That is, the touch panel 10 and the display device 100 can provide operation with very high precision.

Finally, it is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

## Claims

1. A touch panel comprising:
a first electrode plate comprising a first base and a first conductive layer located on a surface of the first base; and
a second electrode plate separated from the first electrode plate and comprising a second base and a second conductive layer located on a surface of the second base, wherein the second conductive layer is opposite to the first conductive layer, wherein at least one of the first conductive layer and the second conductive layer comprises a plurality of spaced carbon nanotube structures.

2. A touch panel as claimed in claim 1, wherein each carbon nanotube structure is selected from a group consisting of at least one carbon nanotube film, at least one carbon nanotube wire-like structure and a composite structure comprising at least one carbon nanotube film and at least one carbon nanotube wire-like structure.

3. A touch panel as claimed in claim 2, wherein the carbon nanotube structure comprises at least two carbon nanotube films stacked with each other or located side by side.

4. A touch panel as claimed in claim 2 or 3, wherein the carbon nanotube film comprises a plurality of carbon nanotubes uniformly distributed and arranged orderly.

5. A touch panel as claimed in any of claims 2 to 4, wherein the carbon nanotube film comprises a plurality of carbon nanotubes arranged along a preferred orientation and combined by Van der Waals attractive force therebetween.

6. A touch panel as claimed in claim 2, wherein the carbon nanotube structure comprises a plurality of carbon nanotube wire-like structures located side by side.

7. A touch panel as claimed in any of claims 2 or 6, wherein the carbon nanotube wire-like structure is selected from a group consisting of at least one twisted carbon nanotube wire, at least one untwisted carbon nanotube wire and a combination thereof.

8. A touch panel as claimed in claim 7, wherein the carbon nanotube wire-like structure comprises a plurality of carbon nanotube wires parallel with each other to form a bundle-like structure or a plurality of carbon nanotube wires twisted with each other to form a twisted wire-like structure.

9. A touch panel as claimed in any preceding claim wherein a distance between adjacent carbon nanotube structures ranges from about 5 nanometers to about 1 millimeter.

10. A touch panel as claimed in any preceding claim wherein the first electrode plate comprises at least two first-electrodes located separately at opposite sides of the first conductive layer and each of the at least two first-electrodes is oriented along a second direction and connected with the first conductive layer, wherein the second electrode plate comprises at least two second-electrodes located separately at opposite sides of the second conductive layer and each of the at least two second-electrodes is oriented along a first direction and connected with the second conductive layer.

11. A touch panel as claimed in any preceding claim wherein both the first conductive layer and the second conductive layer comprise the plurality of spaced carbon nanotube structures and the carbon nanotube structures in the first conductive layer cross the carbon nanotube structures in the second conductive layer.

12. A touch panel as claimed in claim 11, wherein the carbon nanotube structures in the first conductive layer are parallel with each other and aligned along a first direction, wherein the carbon nanotube structures in the second conductive layer are parallel with each other and aligned along a second direction, wherein the first direction is perpendicular to the second direction.

13. A touch panel as claimed in claim 11 or 12, wherein the first electrode plate comprises a plurality of first-electrodes located separately at opposite sides of the first conductive layer, wherein each of the plurality of first-electrodes is oriented along the second direction, wherein two ends of the carbon nanotube structures in the first conductive layer are connected with two opposite first-electrodes and each first-electrode is connected with one end of at least one of the carbon nanotube structures, wherein the second electrode plate comprises a plurality of second-electrodes located separately at opposite sides of the second conductive layer, wherein each of the plurality of second-electrodes is oriented along the first direction, wherein two ends of the carbon nanotube structures in the second conductive layer are connected with two opposite second-electrodes and each second-electrode is connected with one end of at least one of the carbon nanotube structures.

14. A display device comprising:
a touch panel comprising:
a first electrode plate and a second electrode plate, wherein the first electrode plate comprises a first base and a first conductive layer located on a surface of the first base and the second electrode plate is separated from the first electrode plate and comprises a second base and a second conductive layer located on a surface of the second base, wherein the second conductive layer is opposite to the first conductive layer, wherein at least one of the first and second conductive layers comprises a plurality of spaced carbon nanotube structures; and
a display element adjacent to the touch panel.

15. A display device as claimed in claim 14, wherein the touch panel is spaced from the display element by a distance.
